# EUROPEAN PATENT APPLICATION

(11) **EP 3 904 652 A1**
(43) Date of publication of application: **03.11.2021**
(21) Application number: 21171382.1
(22) Date of filing: 29.04.2021
(51) Int. Cl.: F01N 3/20, F01N 9/00

(54) **EXHAUST GAS AFTER-TREATMENT SYSTEM AND CONTROL METHOD THEREFOR**

(30) Priority: 30.04.2020 CN 202010364258
(71) Applicant: Robert Bosch GmbH, 70442 Stuttgart (DE)
(72) Inventor: Zhao, Wenbin, Wuxi, Jiangsu 214028 (CN); Xu, Yujiang, Wuxi, P.R., Jiangsu 214028 (CN); Grohmann, Jasper, 70469 Stuttgart (DE)

(57) **Abstract**

The present application provides an exhaust gas after-treatment system and method, comprising: a storage tank for storing an exhaust gas after-treatment fluid; an injection module, for jetting out the exhaust gas after-treatment fluid; a supply module, for performing a supply operation of supplying the exhaust gas after-treatment fluid from the storage tank to the injection module and a return flow operation for causing the exhaust gas after-treatment fluid to flow back into the storage tank from the injection module; and a control module, for controlling the supply operation and the return flow operation of the supply module; wherein the exhaust gas after-treatment system further comprises a geographical position determining module for determining a geographical region where the exhaust gas after-treatment system is located, and the control module is further able to control whether the supply module performs the return flow operation at least according to the geographical region where the exhaust gas after-treatment system is located.

## Description

### Technical field

The present application relates to the field of engine exhaust gas after-treatment, in particular to an exhaust gas after-treatment system that performs a safening treatment by means of a reaction between an exhaust gas after-treatment fluid and engine exhaust gas, and a control method thereof.

### Background art

In general, existing exhaust gas after-treatment systems calculate the flow rate of pollutants (nitrogen oxides) in exhaust gas according to the operating conditions of the engine, and on this basis deliver a correspondingly metered amount of an exhaust gas after-treatment fluid (e.g. aqueous urea solution) to an injection module by means of a supply module; the injection module then injects the fluid into the exhaust pipe, so that it reacts chemically or physically with exhaust gas, thus performing a safening treatment. For example, diesel engine exhaust gas after-treatment SCR (Selective Catalytic Reduction) technology uses a reductant to selectively reduce nitrogen oxides NOx (e.g. NO, NO2) to produce nitrogen and water under the action of a catalyst.

During normal operation of an exhaust gas after-treatment system, the injection module will inject the exhaust gas after-treatment fluid, and when operation stops, a small amount of exhaust gas after-treatment fluid will often remain in the injection module. In a low-temperature (e.g. minus 11°C) environment, the residual exhaust gas after-treatment fluid will freeze and expand, thus putting pressure on mechanical components (e.g. the injection module) of the exhaust gas after-treatment system, and thereby causing damage. Thus, when the exhaust gas after-treatment system is switched off, the supply module is generally made to operate in reverse, so that the residual exhaust gas after-treatment fluid flows back into a storage tank from the injection module, a pipeline and the supply module. Thus, even at low temperatures, damage due to freezing of exhaust gas after-treatment fluid will not occur. However, the return flow operation in existing exhaust gas after-treatment systems is configured in a fixed way, and will be carried out even when the ambient temperature is higher than the freezing point of the exhaust gas after-treatment fluid. Thus, in high-temperature environments, the return flow operation will waste energy. Furthermore, the return flow operation will cause corrosive gases in the exhaust pipe to be sucked into the injection module and pipeline; if too large a quantity of corrosive gases is sucked in, this will give rise to corrosion problems, thus affecting the service life of the equipment.

Thus, there is a need for an exhaust gas after-treatment system and control method that can precisely control a return flow operation in an exhaust gas after-treatment process.

### Summary of the invention

An object of the present application is to provide an exhaust gas after-treatment system, in order to solve the problems in the prior art.

For this purpose, according to one aspect of the present application, an exhaust gas after-treatment system is provided, comprising:
a storage tank, for storing an exhaust gas after-treatment fluid;
an injection module, for jetting out the exhaust gas after-treatment fluid;
a supply module, for performing a supply operation of supplying the exhaust gas after-treatment fluid from the storage tank to the injection module and a return flow operation for causing the exhaust gas after-treatment fluid to flow back into the storage tank from the injection module; and
a control module, for controlling the supply operation and the return flow operation of the supply module;
wherein the exhaust gas after-treatment system further comprises a geographical position determining module for determining a geographical region where the exhaust gas after-treatment system is located, and the control module is further configured to be able to control whether the supply module performs the return flow operation at least according to the geographical region where the exhaust gas after-treatment system is located.

According to another aspect of the present application, a control method for the exhaust gas after-treatment system described above is provided, the control method comprising:
determining a geographical region where the exhaust gas after-treatment system is located by means of a geographical position determining module;
controlling whether a supply module performs a return flow operation by means of a control module, at least according to the geographical region where the exhaust gas after-treatment system is located.

The exhaust gas after-treatment system and control method thereof in the present application can flexibly determine whether the return flow operation should be performed, thereby saving energy and reducing corrosion.

### Brief description of the drawings

Exemplary embodiments of the present application are described in detail below with reference to the drawings, but it should be understood that the embodiments described below are merely intended to explain the present application, without limiting the scope thereof, wherein:

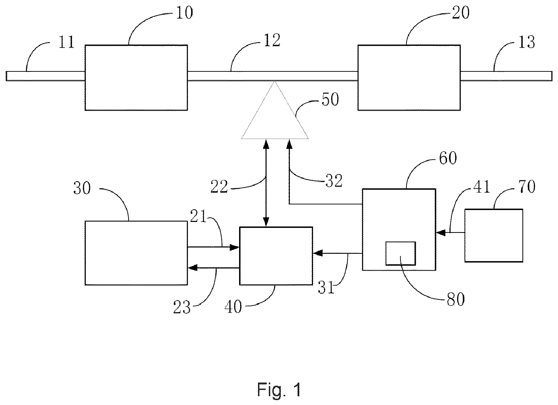

Fig. 1 is a schematic block diagram of an exhaust gas after-treatment system according to an embodiment of the present application; an engine, a catalytic reduction apparatus and associated pipelines are also shown therein.

### Detailed description of the invention

Preferred embodiments of the present application are described in detail below in conjunction with examples. In the preferred embodiments of the present application, the present application is described by taking an exhaust gas after-treatment system of a diesel engine as an example. However, those skilled in the art should understand that these exemplary embodiments do not signify any limitation on the present application. Moreover, in the absence of conflict, embodiments of the present application, and features within embodiments, can be combined. For the sake of simplicity, other components are omitted in the drawings, but this does not mean that the exhaust gas after-treatment system of the present application cannot include other components.

Fig. 1 shows a schematic block diagram of an exhaust gas after-treatment system according to an embodiment of the present application; an engine, a catalytic reduction apparatus and associated pipelines are also shown therein. As shown in Fig. 1, a diesel engine 10 sucks in air through an air pipe 11; the air mixes with fuel, and combustion then takes place in the engine 10; and exhaust gas thus produced is discharged from the engine 10 via an upstream exhaust pipe 12. As the exhaust gas flows through the upstream exhaust pipe 12, an exhaust gas after-treatment fluid enters the upstream exhaust pipe 12 under the control of the exhaust gas after-treatment system and mixes with the exhaust gas, which then enters an SCR catalytic reduction apparatus 20. After undergoing catalytic reduction, the now safened exhaust gas is discharged from a downstream exhaust pipe 13 into the atmosphere. It should be pointed out that for different catalytic reduction apparatuses, the exhaust gas after-treatment fluid can also enter the exhaust pipe in different sections.

The exhaust gas after-treatment system of the present application generally comprises a storage tank 30 for storing exhaust gas after-treatment fluid, a supply module 40, an injection module 50 and a control module 60, wherein the injection module 50 is configured to jet out exhaust gas after-treatment fluid, the supply module 40 is configured to perform a supply operation of supplying exhaust gas after-treatment fluid from the storage tank 30 to the injection module 50 and a return flow operation for causing exhaust gas after-treatment fluid to flow back into the storage tank 30 from the injection module 50, and the control module 60 is configured to control the supply operation and return flow operation of the supply module 40. As shown in Fig. 1, a suction pipeline 21 for sucking exhaust gas after-treatment fluid from the storage tank 30 to the supply module 40, and a return flow pipeline 23 for causing exhaust gas after-treatment fluid to flow back into the storage tank 30 from the supply module 40, are provided between the storage tank 30 and the supply module 40; and a pressure pipeline 22 for supplying exhaust gas after-treatment fluid is provided between the supply module 40 and the injection module 50. Of course, the pressure pipeline 22 may also be configured to enable the return flow of exhaust gas after-treatment fluid from the injection module 50. The control module 60 can send instructions to the supply module 40 via a first line 31 to perform the supply operation and return flow operation, and can send an instruction to the injection module 50 via a second line 32 to perform injection. It should be pointed out that the control module 60 can also send instructions to perform further operations, e.g. instructions for changing the supply amount and injection amount of exhaust gas after-treatment fluid. The control module 60 may be an independent module, or part of an electronic control unit (ECU) of the engine.

According to an embodiment of the present application, the exhaust gas after-treatment system further comprises a geographical position determining module 70 for determining a geographical region where the exhaust gas after-treatment system is located. Specifically, the geographical position determining module 70 may for example be a geographical position perception module of a receiver of the GPS, GLONASS, GALILEO or BeiDou Navigation Satellite System. The geographical region where the exhaust gas after-treatment system is located, e.g. city or province, can be determined according to satellite navigation data received by the geographical position determining module 70. The control module 60 is further configured to be able to control whether the supply module 40 performs the return flow operation, at least according to the geographical region where the exhaust gas after-treatment system is located. For example, when the area where the exhaust gas after-treatment system is located is Hainan province, the control module 60 can control the supply module 40 so that it does not perform the return flow operation, because the daily minimum air temperature in Hainan province is much higher than the freezing point of exhaust gas after-treatment fluid. As another example, when the area where the exhaust gas after-treatment system is located is a high-altitude area in Tibet, the control module 60 can control the supply module 40 so that it must perform the return flow operation, because the daily minimum air temperature in this area is lower than the freezing point of exhaust gas after-treatment fluid. Further details are given below about the way in which the control module 60 controls the supply module 40 to perform the return flow operation according to the geographical region where the exhaust gas after-treatment system is located.

To facilitate the operation of the control module 60, the exhaust gas after-treatment system of the present application further comprises a storage module 80, which can store data for determining whether the air temperature in the geographical region where the exhaust gas after-treatment system is located can cause freezing of exhaust gas after-treatment fluid. The storage module 80 may be an independent module, or part of the control module 60, as shown in Fig. 1. Based on the data, stored in the storage module 80, for determining whether the air temperature in the geographical region where the exhaust gas after-treatment system is located can cause freezing of exhaust gas after-treatment fluid, the control module 60 can send a corresponding instruction to the supply module 40.

According to an embodiment of the present application, historical air temperature data for the geographical region where the exhaust gas after-treatment system is located can be stored in the storage module 80. The historical air temperature data for a geographical region should include the daily minimum air temperatures for at least one recording period (e.g. a whole year) in the geographical region. Thus, it is possible to determine, based on the historical air temperature data, whether the air temperature in the geographical region might cause exhaust gas after-treatment fluid to freeze. The historical air temperature data for a geographical region may include the mean values of daily minimum air temperatures on corresponding dates (i.e. dates that refer to the same month and the same day, but in different years) of multiple recording periods in the geographical region, e.g. historical mean values of daily minimum air temperatures on corresponding dates of the last three years.

The historical air temperature data can be stored in the storage module 80 in the form of a lookup table of dates and corresponding daily minimum air temperatures; thus, based on today's date, the control module 60 can look up corresponding historical air temperature data in the storage module 80, and can thereby predict the daily minimum air temperature on today's date. The historical air temperature data can also be stored in the storage module 80 in the form of a graph formed by fitting daily minimum air temperatures, e.g. a graph of daily minimum air temperatures for each recording period; thus, the control module 60 can predict the daily minimum air temperature on today's date according to the variation of the graph. Of course, such a temperature graph may also be a graph formed by fitting mean values of daily minimum air temperatures on corresponding dates in multiple recording periods. In this text, the daily minimum air temperature may be daily record data in one recording period, or the mean value of multi-day record data for corresponding dates in multiple recording periods.

Based on the historical air temperature data for the geographical region where the exhaust gas after-treatment system is located, the control module 60 can control whether the supply module 40 performs the return flow operation. When the daily minimum air temperatures in at least one recording period for a geographical region are all higher than the freezing point of exhaust gas after-treatment fluid, the exhaust gas after-treatment fluid is not at risk of freezing, e.g. in the South China region, therefore the control module 60 controls the supply module 40 so that it does not perform the return flow operation; when the daily minimum air temperatures in at least one recording period for a geographical region are all lower than the freezing point of exhaust gas after-treatment fluid, the exhaust gas after-treatment fluid is highly likely to freeze, e.g. in a high-altitude region, therefore the control module 60 controls the supply module 40 so that it performs the return flow operation; when the daily minimum air temperatures on one portion of dates in at least one recording period for one geographical region are higher than the freezing point of exhaust gas after-treatment fluid, but the daily minimum air temperatures on another portion of dates are lower than or equal to the freezing point of exhaust gas after-treatment fluid, the exhaust gas after-treatment fluid is at a certain risk of freezing, therefore the control module 60 can refer to today's date to control whether the supply module 40 performs the return flow operation. For example, a determination is made as to whether the return flow operation should be performed by determining which of the abovementioned portions of dates today's date belongs to.

According to another embodiment of the present application, the storage module 80 may have stored therein judgement data corresponding to today's date for the geographical region where the exhaust gas after-treatment system is located, for judging whether to perform the return flow operation. For example, the storage module 80 has stored therein judgement data listed by date for judging whether to perform the return flow operation each day, for a particular geographical region; the judgement data may be expressed as "yes" and "no", "1" and "0", or in another similar form. Thus, after determining the geographical region where the exhaust gas after-treatment system is located, the control module 60 can control whether the supply module 40 performs the return flow operation according to the judgement data for today's date.

As an example, multiple geographical regions can be divided into different groups according to historical air temperature data for the multiple geographical regions. Thus, it is possible to determine whether it is necessary to perform the return flow operation according to the group that a geographical region is in. For example, multiple geographical regions can be divided into at least three groups of geographical regions, wherein a first group of geographical regions is defined such that the daily minimum air temperatures in the at least one recording period in this group are all higher than the freezing point of exhaust gas after-treatment fluid; a second group of geographical regions is defined such that the daily minimum air temperatures in the at least one recording period in this group are all lower than the freezing point of exhaust gas after-treatment fluid; and a third group of geographical regions is defined such that the daily minimum air temperatures on one portion of dates in the at least one recording period in this group are higher than the freezing point of exhaust gas after-treatment fluid, but the daily minimum air temperatures on another portion of dates are lower than or equal to the freezing point of exhaust gas after-treatment fluid. Of course, multiple geographical regions can be divided into two sets of geographical regions; for example, the second group and third group mentioned above could be merged to form a single group.

Based on grouping data for the geographical region where the exhaust gas after-treatment system is located, the control module 60 can perform different operations. For example, when the geographical region where the exhaust gas after-treatment system is located is in the first group of geographical regions, the control module 60 controls the supply module 40 so that it does not perform the return flow operation; when the geographical region where the exhaust gas after-treatment system is located is in the second group of geographical regions, the control module 60 controls the supply module 40 so that it performs the return flow operation; when the geographical region where the exhaust gas after-treatment system is located is in the third group of geographical regions, the control module 60 determines whether the return flow operation should be performed by comparing the daily minimum air temperature in historical air temperature data corresponding to today's date with the freezing point of exhaust gas after-treatment fluid. Specifically, the daily minimum air temperature in historical air temperature data corresponding to today's date is compared with the freezing point of exhaust gas after-treatment fluid, and if the daily minimum air temperature in historical air temperature data corresponding to today's date is higher than the freezing point of exhaust gas after-treatment fluid, the return flow operation is not performed; conversely, if the daily minimum air temperature in historical air temperature data corresponding to today's date is lower than or equal to the freezing point of exhaust gas after-treatment fluid, the return flow operation is performed.

By grouping multiple geographical regions, the storage module 80 need only store grouping data for each geographical region, and need not store historical air temperature data for each geographical region; the data that is stored is thereby simplified. The grouping data can be calculated by the manufacturer of the exhaust gas after-treatment system in the manner described above according to information such as historical air temperature data for each geographical region and the freezing point of exhaust gas after-treatment fluid and then inputted into the storage module 80.

The operating process and control method of the exhaust gas after-treatment system of the present application are described below by taking a vehicle driven by a diesel engine as an example.

When the exhaust gas after-treatment system is operating normally, exhaust gas after-treatment fluid enters the supply module 40 from the storage tank 30 via the suction pipeline 21 under the action of the suction force of the supply module 40, then flows into the injection module 50 via the pressure pipeline 22 and is injected into the upstream exhaust pipe 12.

When the exhaust gas after-treatment system prepares to stop operating and prepares to perform the return flow operation, the control module 60 receives a signal from the geographical position determining module 70, and determines the geographical region where the exhaust gas after-treatment system is located. For example, it is possible to determine by means of a GPS module which province or city the vehicle has travelled to.

The control module 60 can control whether the supply module 40 performs the return flow operation according to the geographical region where the exhaust gas after-treatment system is located.

Specifically, the control module 60 can control whether the supply module 40 performs the return flow operation according to data, stored in the storage module 80, for determining whether the air temperature in the geographical region where the exhaust gas after-treatment system is located can cause freezing of exhaust gas after-treatment fluid.

For example, the data stored in the storage module 80 comprises historical air temperature data for the geographical region (including daily minimum air temperatures in at least one recording period), or judgement data corresponding to today's date for the geographical region, for judging whether to perform the return flow operation; and the control module 60 can control whether the supply module 40 performs the return flow operation according to the historical air temperature data or the judgement data.

Thus, as the vehicle travels to different geographical regions, the return flow operation of the exhaust gas after-treatment system can be controlled flexibly, and it is thereby possible to save energy and reduce corrosion.

In an embodiment of the present application, the exhaust gas after-treatment fluid may be an aqueous urea solution, but may of course also be another catalytic reductant or any substance that reacts with exhaust gas. For different exhaust gas after-treatment fluids, on-site calibration of the freezing points thereof can be performed, and data relating to geographical region grouping and judgement data listed by date for judging whether to perform the return flow operation, recalculated according to freezing point variation, can be stored in the storage module. Of course, data relating to freezing point can also be stored in the storage module.

The present application has been described in detail above in conjunction with particular embodiments. Obviously, all of the embodiments described above and shown in the drawings should be understood as being exemplary, without limiting the present application. For example, the present application has been described in preferred embodiments by taking an exhaust gas after-treatment system for after-treatment of diesel engine exhaust gas as an example, but can be applied in any field where exhaust gas after-treatment fluid is used for after-treatment of exhaust gas, not just in the field of engines. A person skilled in the art could make various alterations or amendments to the present application without departing from the spirit thereof, all such alterations or amendments falling within the scope of the present application.

## Claims

1. Exhaust gas after-treatment system, comprising:
a storage tank (30), for storing an exhaust gas after-treatment fluid;
an injection module (50), for jetting out the exhaust gas after-treatment fluid;
a supply module (40), for performing a supply operation of supplying the exhaust gas after-treatment fluid from the storage tank (30) to the injection module (50) and a return flow operation for causing the exhaust gas after-treatment fluid to flow back into the storage tank (30) from the injection module (50); and
a control module (60), for controlling the supply operation and the return flow operation of the supply module (40);
wherein the exhaust gas after-treatment system further comprises a geographical position determining module (70) for determining a geographical region where the exhaust gas after-treatment system is located, and the control module (60) is further configured to be able to control whether the supply module (40) performs the return flow operation at least according to the geographical region where the exhaust gas after-treatment system is located.

2. Exhaust gas after-treatment system according to Claim 1, wherein the exhaust gas after-treatment system further comprises a storage module (80), which stores data for determining whether the air temperature in the geographical region can cause freezing of the exhaust gas after-treatment fluid.

3. Exhaust gas after-treatment system according to Claim 2, wherein the data comprises historical air temperature data for the geographical region, the historical air temperature data comprising daily minimum air temperatures in at least one recording period.

4. Exhaust gas after-treatment system according to Claim 3, wherein the control module (60) is further configured to control whether the supply module (40) performs the return flow operation according to the historical air temperature data for the geographical region.

5. Exhaust gas after-treatment system according to Claim 3, wherein the historical air temperature data further comprises mean values of daily minimum air temperatures on corresponding dates in multiple recording periods, and the historical air temperature data is stored in the storage module (80) in the form of a lookup table of dates and corresponding daily minimum air temperatures, and/or in the form of a graph formed by fitting daily minimum air temperatures.

6. Exhaust gas after-treatment system according to Claim 2, wherein the data comprises judgement data corresponding to today's date for the geographical region, for judging whether to perform the return flow operation.

7. Exhaust gas after-treatment system according to Claim 6, wherein the control module (60) is further configured to control whether the supply module (40) performs the return flow operation according to the judgement data.

8. Control method for the exhaust gas after-treatment system according to Claim 1, the control method comprising:
determining a geographical region where the exhaust gas after-treatment system is located by means of a geographical position determining module (70;
controlling whether a supply module (40) performs a return flow operation by means of a control module (60), at least according to the geographical region where the exhaust gas after-treatment system is located.

9. Control method according to Claim 8, wherein the control method further comprises: controlling whether the supply module (40) performs the return flow operation according to data, stored in a storage module (80) of the exhaust gas after-treatment system, for determining whether the air temperature in the geographical region can cause freezing of the exhaust gas after-treatment fluid.

10. Control method according to Claim 9, wherein the data comprises historical air temperature data for the geographical region, the historical air temperature data comprising daily minimum air temperatures in at least one recording period, and/or the data comprises judgement data corresponding to today's date for the geographical region, for judging whether to perform the return flow operation, and the control method further comprises: controlling whether the supply module (40) performs the return flow operation according to the historical air temperature data and/or the judgement data.
